(19)

Europäisches
Patentamt
European
Patent Office
Office européen
des brevets

(11) **EP 4 112 266 A1**

(12) **EUROPEAN PATENT APPLICATION**

(43) Date of publication:
04.01.2023 Bulletin 2023/01

(21) Application number: **22179391.2**

(22) Date of filing: **16.06.2022**

(51) International Patent Classification (IPC):
*B29C 45/14* (2006.01)   *B29C 70/08* (2006.01)
*B29C 70/70* (2006.01)   *B29C 70/02* (2006.01)
*B29D 99/00* (2010.01)   *B29C 43/20* (2006.01)
*B29C 70/46* (2006.01)   *B29C 70/54* (2006.01)
*B32B 19/04* (2006.01)   *B32B 23/00* (2006.01)
*B60R 13/02* (2006.01)   *B32B 9/06* (2006.01)
*B32B 23/06* (2006.01)   *B32B 27/10* (2006.01)
*B32B 29/00* (2006.01)   *B29C 70/86* (2006.01)
*B32B 38/00* (2006.01)   *B29C 69/00* (2006.01)

(52) Cooperative Patent Classification (CPC):
B29C 70/081; B29C 43/20; B29C 45/1418;
B29C 45/14377; B29C 45/14631; B29C 69/001;
B29C 70/02; B29C 70/023; B29C 70/026;
B29C 70/46; B29C 70/54; B29C 70/545;
B29C 70/70; B29C 70/86; B29D 99/001;   (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.06.2021 US 202117362826**

(71) Applicant: **Volkswagen Aktiengesellschaft
38440 Wolfsburg (DE)**

(72) Inventors:
• **Kardos, Marton
Knoxville 37920 (US)**
• **Mainka, Hendrik
Athens 37303 (US)**

(54) **METHOD FOR MANUFACTURING NEAR-NET SHAPE NATURAL FIBER REINFORCED POLYMER COMPOSITE PANELS**

(57)     A fiber-reinforced polymer composite assembly that includes a plurality of sheets, each formed from a composite mixture including a fibrous material and a resin, wherein each of the first plurality of sheets are cut to one or more predetermined dimensions. The plurality of sheets are configured to form a stack, and wherein the stack is shaped by positioning the stack on a mold and pressing and consolidating/curing the stack to form a doubly-curved geometric shape. An insert may be positioned between the plurality of sheets, prior to the pressing and consolidating/curing, wherein the fibrous material may in include paper, and wherein the resin includes one of a thermoset resin or a thermoplastic resin.

FIG. 8

**(Cont. next page)**

EP 4 112 266 A1

(52) Cooperative Patent Classification (CPC): (Cont.)
**B32B 9/06; B32B 19/04; B32B 23/00;**
**B32B 23/06; B32B 27/10; B32B 29/00;**
**B32B 29/005; B60R 13/02;** B29C 2793/0081;
B29C 2793/009

**Description**

The present disclosure relates to the manufacture of composite panels. More specifically, the present disclosure relates to technologies and techniques for manufacturing composite panels utilizing fibrous materials from natural sources, such as paper, and polymer materials.

There is a need for lightweight, sustainable materials in the automotive industry. Current vehicle body panels are manufactured primarily out of metals such as steel and aluminum, along with plastics, and, to a lesser extent, carbon or glass fiber reinforced plastics. It is estimated that, in the case of metal-based body panels, the painting process of such panels accounts for approximately 50% of the energy consumption of the entire manufacturing process. Painted metal surfaces are chemically stable, but are prone to mechanical damage, such as dents and scratches, which may lead to expensive repairs. Thermoplastic exterior panels, such as most bumpers, are dent-resistant and low weight, but the materials are inherently incompatible with coating processes used for metals, due to their temperature sensitivity. Therefore, their paint process requires reduced temperatures, which in turn requires paint materials with higher solvent ratios. This leads to a coating process with lower energy usage but increased chemical/ecological footprint.

Thermoplastic body panels are usually manufactured from injection molded polypropylenes (PP) or thermoplastic olefins (TPO). Thermoformed flat thermoplastic sheet panels are used as well, but suffer from very limited design freedom. Generally, materials used in the automotive industry today are manufactured and painted in energy-intensive processes with a significant ecological footprint, leading to components with high embodied energy and damage-prone surfaces.

The use of natural fiber composite materials has increased recently, as most industry sectors are striving to reduce their carbon footprint and turn toward renewable resources. Paper-based composites are interesting in particular, as paper fibers are readily recyclable and available in most regions of the world. Sheets of paper are typically impregnated with a phenolic resin, dried, stacked, and pressed, similarly to the conventional plywood manufacturing process. However, the structure of conventional paper composite materials limits the application to primarily flat surfaces and/or simple curved (developable) surfaces. Other paper-based materials include molded fiber products, which can take up complex geometries but usually aren't fully consolidated with plastics and rely on the bonds formed between cellulose fibers. Furthermore, additional development is needed to provide paper composite materials with greater structural integrity, while allowing the materials to be formed into more complex shapes, as well as providing configurations for installing and/or embedding electrical and/or mechanical components, such as those found in vehicle systems or other suitable systems.

Various apparatus, systems and methods are disclosed herein relating to the manufacture of doubly-curved panels made of recyclable materials.

In some examples, a method is disclosed for manufacturing a fiber-reinforced polymer composite assembly, comprising: forming a plurality of sheets from a composite mixture comprising a fibrous material and a resin; cutting each of the plurality of sheets to one or more predetermined dimensions; forming a stack by positioning an insert between an upper plurality of sheets and a lower plurality of sheets; positioning the stack on a mold; and pressing and consolidating the stack on the mold to form the composite assembly.

In some examples, a fiber-reinforced polymer composite assembly is disclosed, comprising: a first plurality of sheets, each formed from a composite mixture comprising a fibrous material and a resin, wherein each of the first plurality of sheets are cut to one or more predetermined dimensions; a second plurality of sheets, each formed from the composite mixture comprising the fibrous material and the resin, wherein each of the second plurality of sheets are cut to one or more predetermined dimensions; and an insert, positioned between the first plurality of sheets and the second plurality of sheets, wherein the first plurality of sheets, the second plurality of sheets, and the insert are configured to form a stack, and wherein the stack is shaped by positioning the stack on a mold and pressing and curing the stack to form the composite assembly.

In some examples, a fiber-reinforced polymer composite assembly is disclosed, comprising: a first plurality of sheets, each formed from a composite mixture comprising a fibrous material and a resin, wherein each of the first plurality of sheets are cut to one or more predetermined dimensions; and a second plurality of sheets, each formed from the composite mixture comprising the fibrous material and the resin, wherein each of the second plurality of sheets are cut to one or more predetermined dimensions; wherein the first plurality of sheets and the second plurality of sheets are configured to form a stack, and wherein the stack is shaped by positioning the stack on a mold and pressing and curing the stack to form a doubly-curved geometric shape.

In some examples, each of the plurality of sheets may be cut to one or more predetermined dimensions by removing one or more portions of at least some of the plurality of sheets, and wherein the location of the one or more portions is contiguous throughout each of the at least some of the plurality of sheets. The location of the one or more portions may be configured to form at least one of a hole, notch and cavity within the at least some of the plurality of sheets when pressing and consolidating the stack on the mold. In some examples, pressing and consolidating the stack may include subjecting the stack to a hot press and stamping.

In some examples, forming the fibrous material may include forming the fibrous material using paper, and wherein the resin comprises one of a thermoset resin or a thermoplastic resin. The thermoset resin may include one of a phenolic, epoxy, unsaturated polyester, vinyl ester, polyurethane, or polyimide resin, and wherein the thermoplastic resin may include one of a polypropylene, polyethylene, polyethylene terephthalate, polycarbonate, acrylonitrile butadiene styrene, polyamides, or polystyrene resin. In some examples, the fiber-reinforced polymer composite assembly may be subjected to back-injection molding of the composite assembly.

The present invention is illustrated by way of example and not limitation in the figures of the accompanying drawings, in which like references indicate similar elements and in which:

FIG. 1     shows a system for manufacturing polymer-reinforced fibrous composite materials according to some aspects of the present disclosure;

FIG. 2     shows an exemplary process for manufacturing fiber-reinforced polymer composite materials according to some aspects of the present disclosure;

FIG. 3     shows another exemplary process for manufacturing fiber-reinforced polymer composite materials according to some aspects of the present disclosure;

FIG. 4     shows a further exemplary process for manufacturing fiber-reinforced polymer composite materials according to some aspects of the present disclosure;

FIG. 5     shows a still further exemplary process for manufacturing fiber-reinforced polymer composite materials under some aspects of the disclosure;

FIG. 6A     shows an illustration of components of a fiber-reinforced polymer composite assembly according to some aspects of the present disclosure;

FIG. 6B     shows an illustration of an assembled fiber-reinforced polymer composite assembly of FIG. 6A according to some aspects of the present disclosure;

FIG. 7A     shows an illustration of components of a fiber-reinforced polymer composite assembly including a cavity for housing a vehicle component according to some aspects of the present disclosure;

FIG. 7B     shows an illustration of assembled components of the fiber-reinforced polymer composite assembly of FIG. 7A, with the housed vehicle component according to some aspects of the present disclosure; and

FIG. 8     shows a process for manufacturing a fiber-reinforced polymer composite assembly according to come aspects of the present disclosure.

The figures and descriptions provided herein may have been simplified to illustrate aspects that are relevant for a clear understanding of the herein described devices, structures, systems, and methods, while eliminating, for the purpose of clarity, other aspects that may be found in typical similar devices, systems, and methods. Those of ordinary skill may thus recognize that other elements and/or operations may be desirable and/or necessary to implement the devices, systems, and methods described herein. But because such elements and operations are known in the art, and because they do not facilitate a better understanding of the present disclosure, a discussion of such elements and operations may not be provided herein. However, the present disclosure is deemed to inherently include all such elements, variations, and modifications to the described aspects that would be known to those of ordinary skill in the art.

Exemplary embodiments are provided throughout so that this disclosure is sufficiently thorough and fully conveys the scope of the disclosed embodiments to those who are skilled in the art. Numerous specific details are set forth, such as examples of specific components, devices, and methods, to provide this thorough understanding of embodiments of the present disclosure. Nevertheless, it will be apparent to those skilled in the art that specific disclosed details need not be employed, and that exemplary embodiments may be embodied in different forms. As such, the exemplary embodiments should not be construed to limit the scope of the disclosure. In some exemplary embodiments, well-known processes, well-known device structures, and well-known technologies may not be described in detail.

The terminology used herein is for the purpose of describing particular exemplary embodiments only and is not intended to be limiting. As used herein, the singular forms "a", "an" and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The steps, processes, and operations described herein are not to be construed as necessarily requiring their respective performance in the particular order discussed or illustrated, unless specifically identified as a preferred order of performance. It is also to be understood that additional or alternative steps may be employed.

When an element or layer is referred to as being "on", "engaged to", "connected to" or "coupled to" another element or layer, it may be directly on, engaged, connected or coupled to the other element or layer, or intervening elements or layers may be present. In contrast, when an element is referred to as being "directly on," "directly engaged to", "directly connected to" or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another element, component, region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the exemplary embodiments.

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

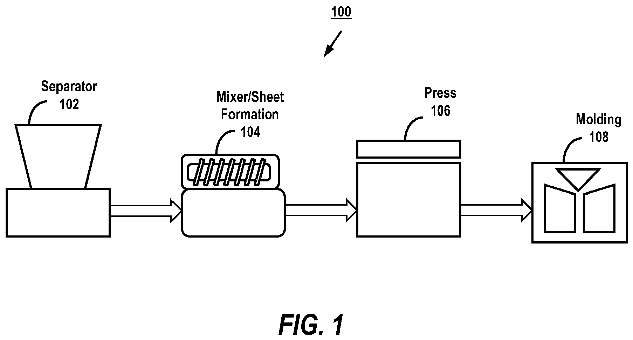

Turning to FIG. 1, the drawing shows a system 100 for manufacturing fiber-reinforced polymer composite materials according to some aspects of the present disclosure. In some examples, the system 100 may include a separator 102 that is configured to separate fibrous raw material, such as paper or other similar natural fiber material. The separator 102 may be configured as a hammer mill that may include a rotor assembly on which swinging hammers are mounted, a screen, and a fan. The screen, which may be configured as perforated sheet metal is mounted below, above and/or around the hammers. After the fibrous material is fed into the grinding chamber of the separator 102, it is initially struck by the rotating hammers and then thrown against grid plates.

Therefore, the fibers are separated by the repeated hammer impacts, collisions with the grid plates and walls of grinding chamber as well as particle on particle impacts.

As soon as the particle size of material is reduced to the size smaller than that of the holes of the screen, the particles will pass through the screen and separate out through the outlet of the mill. In some examples, the grinding chamber may be configured with a circular or a non-circular shape. For non-circular shapes, the grinding chamber may be configured in a teardrop shape, ellipse, octagon such that a material-circulation layer cannot be formed in the chamber, since the edges of the non-circular chamber eliminate the circulating motion of the material. If second-time grinding is used, it may be realized using a grinder and a sieving device in which the material is ground in the grinder, then fed into sieving device for sieving, with a feedback for larger particles from the sieve to be ground again. Alternately, a course and a fine grinder may be used for second-time grinding.

In some examples, the separator 102 may be configured as a carding machine, in which the fibers from the fibrous material (e.g., pulp) are prepared using opening and carding to produce webs that are placed one on top of the other in various geometric arrangements (e.g., parallel, cross, composite, random). The fibrous material may be cleaned, separated, and oriented via drums coated with wires or teeth. Depending on the application, each arrangement may be configured to produce a different fiber orientation. The fibers in the web may then be reinforced by utilizing techniques such as needlepunching, where barbed needles are used to mechanically entangle the web, or stitchbonding, where webs are reinforced by stitching, a principle similar to warp knitting. In some examples, a web may be bonded by using a calender to apply heat and pressure for area and/or point bonding. Area bonding involves two smooth calenders through which the web is passed. Point bonding involves one patterned and one smooth calender, resulting in a loftier and textured web.

In some examples, chemical bonding may be used for a carding machine to tie down the fibers used in making a web. Various properties can be imparted to the web when using latex binders to consolidate the web. For example, the material may be configured to be heat sealable, flame retardant, pill-resistant, tear-resistant, colored, etc. In some examples, thru-air bonding may be used to exposing the web surface to hot air while moving through an oven, to produce a lofty and flexible material. Persons having skill in the art will recognize that the techniques described above with respect to the carding machine and hammer mill are examples of "dry" separation. Other suitable forms of dry separation are contemplated in the present disclosure.

In some examples, the separator 102 may be configured as a pulper configured to convert a fibrous material (e.g., paper) into a slurry of separated fibers and other waste paper components. During operation, the separator 102, when configured as a pulper, detaches contaminants and mixes the fibrous material with water and chemicals in predetermined ratios. A conveyor may feed fibrous material to a pulper tub, where a rotor applies mechanical and hydraulic energy to agitate the material. A baffle may assist in mixing before the processed fibrous material is exited from the machine. The pulper may be configured as a batch pulper or a continuous pulper, depending on the specific application being used. In some examples, the separator 102 may be configured as a refiner configured to apply compressive shear force between, for example, a bar roll and a smooth housing to beat fibrous pulp. The refiner may be configured as a Valley (or Hollander) beater, where pulp at low consistency is circulated through a beater roll where a bed plate connected to a lever arm applies load. Fibers may undergo refining while passing through the beater roll and bed plate. The degrees of refining may be controlled by applied load and beating time. Persons having skill in the art will recognize that the techniques described above with respect to pulper and refiner are examples of "wet" separation. Other suitable forms of wet separation are contemplated in the present disclosure. Any of the disclosed configurations for the separator 102, as well as any suitable equivalents known in the art, may serve as a means for separating as described in the present disclosure.

The output of the separator 102 may be provided to a mixer/sheet formation device 104 to mix the processed fibrous material from the separator 102, with an additive, such as thermoplastic cut fibers. While the example of FIG. 1 shows the separator 102 and the mixer/sheet formation device 104 as two separate devices, one having ordinary skill in the art will understand that the devices, or any portion of the devices (e.g., the mixer) may be combined into one unit or device. In this example, the mixer of the device 104 may be configured to receive a resin or plastic material in a fiber, powder, granule or liquid form, and mix the resin or plastic material with the fibrous material output from the separator 102. The plastic material to be mixed with the separated fibrous material may be received via a hopper or other suitable mechanism, which is not shown in the figure for the sake of brevity. In some examples, the mechanism for mixing may be a screw mixer, a cavity transfer mixer, or a mixing mechanism of any suitable design. In some examples, applicable resins include, but are not limited to, thermoset resins such as phenolic, epoxy, unsaturated polyester, vinyl ester, polyurethane, and polyimide resins. In some examples, applicable plastics include, but are not limited to, thermoplastics such as polypropylene, polyethylene, polyethylene terephthalate, polycarbonate, acrylonitrile butadiene styrene, polyamides, and polystyrene. Those skilled in the art will recognize that this listing is not exhaustive and that other suitable materials are contemplated in the present disclosure.

For sheet formation of the device 104, the fibrous material and resin/plastic mix may be extruded to force the mix through a die of a particular shape to create a product of substantially continuous length and constant cross-section. The extruded product may include, but is not limited to, a sheet, film, fiber, or pipe. For the purposes of the present disclosure, the mixer/sheet formation device 104 produces individual sheets of the fibrous material/resin mixture, where the individual sheets may be cut to a specific overall size or shape, processed (e.g., drilling of holes, cutting specific portions from the overall shape), and stacked (also referred to as a "layup") for consolidation in a press 106. In some examples, the sheet formation device 104 may be configured as an air laying machine, using forced air to mix and lay the fibers onto a conveyor belt or a similar device. In other examples, the sheet formation device 104 may be configured as a wet fiber molding device, collecting the mixed fibrous materials from a wet slurry in either a flat surface or a complex shape. Any of the disclosed configurations for the mixer/sheet formation device 104, as well as any suitable equivalents known in the art, may serve as a means for mixing and/or means for forming as described in the present disclosure.

In some examples, the press 106 may be configured as a hot press (also known as thermal press), where the curing (also referred to herein as "consolidating", e.g., using both thermoplastic and thermoset resins) of a sheet is accelerated by the use of heat and pressure. In some examples, the press 106 may be configured for pre-form molding, which may be suitable for more complex shapes. Here, the fibrous material/resin mixture may be applied by spraying the mixture onto a perforated metal screen having the general shape of the article to be molded. The mixture may be held to the screen by suction applied behind it while a resin binder is sprayed on the mat and the resulting preform is taken out from the screen and cured in an oven (e.g., at 150° C) for several minutes. In some examples, a resin binder and/or an activated resin may be applied during compression. In some examples, the press 106 may be configured for compression molding, where the fibrous material/resin mix is applied as a sheet molding compound configured as a pliable sheet that includes the fibrous material/resin mix. The sheet may be placed between halves of a heated mold, where the application of pressure then forces the sheet to take up the contours of the mold. In some examples, the compression molding may include the application of resins ("wet"), or may be carried out "dry" by not applying or pouring resins onto the material. Any of the disclosed configurations for the press 106, as well as any suitable equivalents known in the art, may serve as a means for pressing as described in the present disclosure.

Once the fibrous material/resin mix is subjected to the press 106, the form may then be subjected to a molding apparatus 108 for further application. In some examples, the molding apparatus 108 may be configured as a back-injection mold apparatus, operable to bond materials such as a decorative film onto the mold generated from the press 106. The molding apparatus 108 may be configured as a reciprocating screw type injection mold apparatus, where an extruder-type screw in a heated barrel rotates to transport, melt and pressurize the material in the barrel, while also operating to move forward like a plunger to inject melt into the mold when not rotating. In some examples, the form from the press 106 may be inserted into a mold, where, after the mold closes, the screw (not rotating) pushes forward to inject melt into the cooled mold. The air inside the mold may be pushed out through small vents at the furthest extremities of the melt flow path. When the cavity is filled, the screw may continue to push forward to apply a holding pressure to squeeze extra melt into the cavity to compensate for shrinkage of the plastic as it cools. Once the gate in the molding apparatus 108 freezes, no more melt can enter the mold, and the molding apparatus 108 may begin a screw back process, in which the screw starts to rotate and draw in new material from the hopper. This may be conveyed to the front of the screw, but as the molding cavity is filled, the effect is to push the screw backwards. This prepares the next shot by accumulating the desired amount of material in front of the screw. At a preset time period, the screw stops rotating and the molding apparatus 108 waits for the solidification of the molding and runner system to be completed. When the molding has cooled to a temperature where it is solid enough to retain its shape, the mold opens and the molding is ejected. Any of the disclosed configurations for the molding apparatus 108, as well as any suitable equivalents known in the art, may serve as a means for molding as described in the present disclosure.

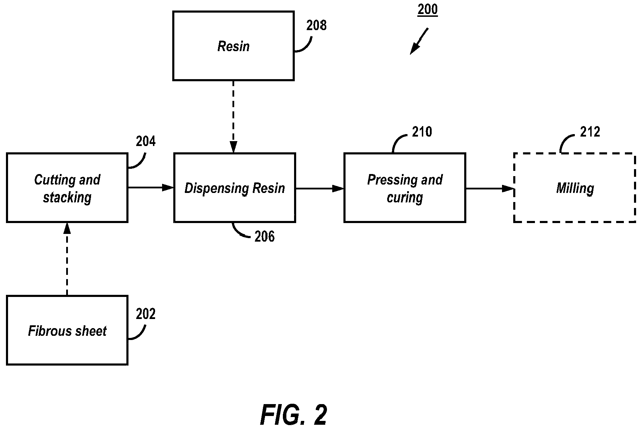

FIG. 2 shows an exemplary process 200 for manufacturing polymer-reinforced fibrous composite materials according to some aspects of the present disclosure. In block 202 a fibrous sheet roll, such as paper material or a suitable natural fiber material, is subjected to cutting and stacking in block 204, to produce a stack of uniform layers. In some examples, the cutting and stacking in block 204 may additionally include the cutting of portions of individual sheets (e.g., cutting corners of sheets, cutting opening on a section of the sheet surface) to produce a notch or cavity when two or more sheets are stacked on top of one another. After cutting and stacking in block 204, the stack may be positioned in a mold, where resin from 208 is dispensed over the stack in dispensing block 206 to form a polymer-reinforced fibrous composite stack forming a layup. The stack may then proceed to block 210 for pressing and curing/consolidating. In some examples, the polymer-reinforced fibrous composite stack may be subjected to wet compression molding. Of course, other suitable pressing and curing/consolidating techniques are contemplated in the present disclosure. Once cured, the stack may optionally be subjected to milling in block 212 to remove any imperfections to the edges or other areas of the stack. The process 200 may be advantageous in that it allows for the manufacture of polymer-reinforced fibrous composite assemblies that may conform to doubly curved geometries. As the resin is dispensed on the stacked fibrous sheets in block 206, this allows the process to work with most fast-acting thermoset resins that are compatible with cellulose fibers.

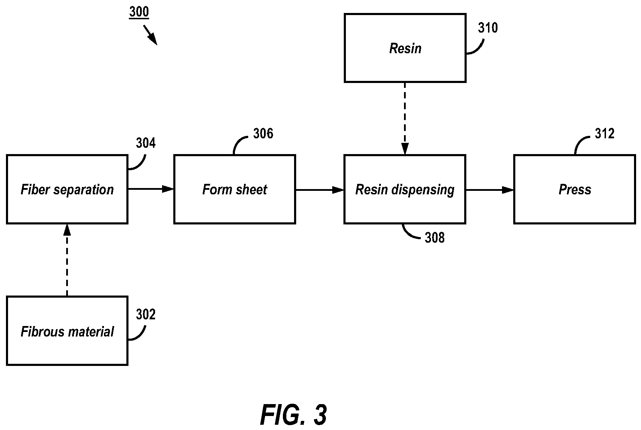

FIG. 3 shows another exemplary process 300 for manufacturing polymer-reinforced fibrous composite materials according to some aspects of the present disclosure. In block 302, fibrous material (e.g., recycled paper) may be subjected to fiber separation in block 304. In some examples, the fiber separation is performed by the separator 102 discussed above in connection with FIG. 1. In the example of FIG. 3, the fiber separation of block 304 is configured as hammer mill fiber separation. Once separated, the material proceeds to block 306, wherein the separated fibrous material is formed into a continuous fibrous sheet. In some examples, the sheet forming of block 306 may be performed by the mixer/sheet formation apparatus 104 discussed above in connection with FIG. 1. The sheet from block 306 then proceeds to resin dispensing block 308, wherein the sheet is positioned on a mold and a thermoset resin 310 is spayed to impregnate each sheet to produce a polymer-reinforced fibrous composite sheet (layup). The sheets may be pressed in block 312 by utilizing wet compression molding, in one example. The saturated sheets, individually or as a stack, may be hot pressed and stamped in block 312 to form a desired shape. The process 300 may be advantageous in that it allows for the manufacture of polymer-reinforced fibrous composite assemblies that may conform to doubly curved geometries. As the resin is dispensed on the stacked fibrous sheets in block 308, this allows the process to work with most fast-acting thermoset resins that are compatible with cellulose fibers. Additionally, by incorporating stamping in the pressing block 312, this may reduce the need for milling edges as discussed above in connection with FIG. 2. Alternately or in addition, the process 300 works with many fibrous materials, allowing for direct on-the-spot recycling.

In some examples, supplemental fibrous materials may be added to the fibrous material after separation. Fibrous material possessing longer fiber characteristics, such as hemp or flax fibers, may be added to the post-separation mix to increase mechanical performance. In some examples, layers of supplemental fibrous materials having longer fibers may be added to the stack before compression molding. Generally speaking, fiber strength has a direct influence on composite strength, with the relation described by the Rule of Mixtures, which provides a weighted mean used to predict various properties of a composite material. From fiber volume fraction, fiber properties, and matrix properties, the mechanical properties of a composite can be predicted/calculated. Using a basic form of the Rule of Mixtures equation used for unidirectional continuous fiber composites, chopped fibers, using the following calculation:

$$E_c = V_f E_f + (1 - V_f) E_m,$$

where $E_c$ is the composite material property (stiffness) in question,

$V_f$ is fiber volume fraction, and
$E_f$ and $E_m$ are the fiber and matrix material property (stiffness), respectively.

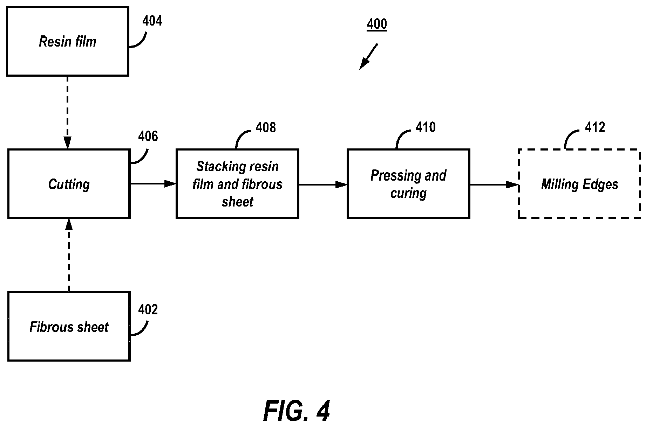

FIG. 4 shows a further exemplary process 400 for manufacturing polymer-reinforced fibrous composite materials according to some aspects of the present disclosure. In this example, the fibrous sheet material 402 and resin film 404 is provided for cutting in block 406. In some examples, the fibrous sheet material 403 may be configured as a recycled paper roll, and resin film 404 may be configured as a thermoplastic resin as film. Of course, those skilled in the art will understand that other suitable materials are contemplated in the present disclosure. In block 406, the fibrous sheet material 402 and resin film 404 are cut to size, and may include further cutting of portions of the sheets (e.g., drilling of holes, cutting specific portions from the overall shape), where the resin film and fibrous sheets are stacked in block 408 to form a layup, and then subjected to pressing and curing in block 410. The pressing and curing of block 410 may include hot pressing or any other suitable technique. In block 412, the cured layup may be subjected to milling to remove any imperfections to the edges or other areas of the stack. Those skilled in the art will recognize that process 400 may be used with any suitable fibrous and resin materials 402, 404, and that the configuration may be advantageous in that it allows for the manufacture of fiber-reinforced polymer composite assemblies that may conform to doubly curved geometries. However, as the fibrous material and resin is utilized in a sheet/film format, drapability options may be limited to some extent.

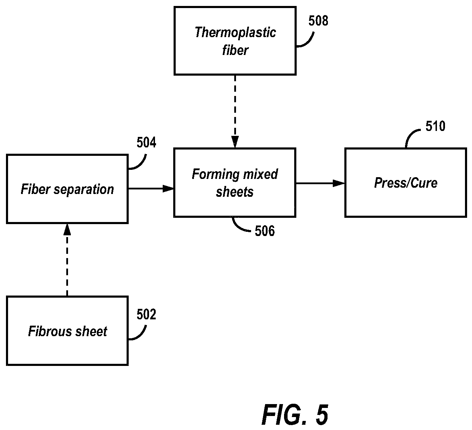

FIG. 5 shows a still further exemplary process 500 for manufacturing fiber-reinforced polymer composite materials under some aspects of the disclosure. In this example, a fibrous sheet (e.g., paper) 502 is subjected to fiber separation in block 504, using the fiber separator 102 discussed above in connection with FIG. 1. In some examples, the fiber separation may be done using a hammer mill or other suitable device. After the separation process is completed, the material is then mixed in block 506 with a thermoplastic fiber 508 (e.g., using the mixer 104) and processed to form fiber-reinforced polymer composite sheets. These sheets may then be provided to a press 510, which may be configured as a hot press, to generate the final form. The process 500 may be advantageous in that it allows for the manufacture of polymer-reinforced fibrous composite assemblies that may conform to doubly curved geometries. Additionally, by incorporating stamping in the pressing block 510, this may reduce the need for milling edges as discussed above in connection with FIG. 2. Alternately or in addition, the process 500 works with may fibrous materials, allowing for direct on-the-spot recycling.

In some aspects, the technologies and techniques disclosed herein may be advantageously applied to automotive applications, such as interior trim or exterior body panels. The drapability of the fibrous material layers, and particularly the visible surface layer, may be improved to allow the flat sheets to confine to doubly curved ("non-developable", or "compound curvature", "non-zero Gaussian curvature") surfaces of the mold. As discussed herein, this may be done through a preforming step performed as the fibrous material (e.g., paper) is wetted out by the resin system (e.g., 206, 308, 506). Drying may be done after preforming to allow for wrinkle-free draping. Furthermore, a top visible layer of a stack (layup) can be modified through printing, which allows for the incorporation of logos or other visual information.

Using techniques such as machine-controlled cutting (e.g., laser cutting or similar) and stacking of the single sheets prior to curing in the press, a three-dimensional structure can be built with preexisting holes and cavities, which can house objects with predefined shapes without the need for milling or cutting. Such objects may include, but are not limited to, radar systems for autonomous vehicles, LED lights for hidden visual effects, or capacitive or ultrasonic sensors for proximity sensing (touch sensing or Park Distance Control). Since the material can be milled similarly to medium density fiberboards, these cavities can be CNC milled after molding as well, if high precision positioning is required.

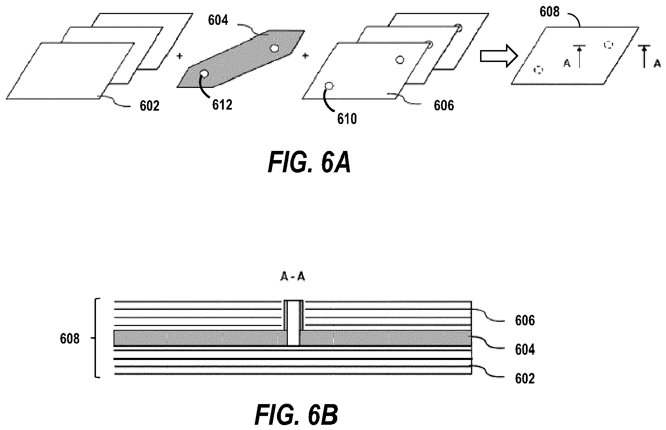

FIG. 6A shows an illustration of components of a fiber-reinforced polymer composite assembly according to some aspects of the present disclosure. In this example, a first plurality of polymer-reinforced fibrous composite sheets 602 are provided, where each of the sheets are manufactured utilizing any of the techniques described above in connection with FIGS. 1-5. A second plurality of polymer-reinforced fibrous composite sheets 606 are also provided, where each of the sheets are manufactured utilizing any of the techniques described above in connection with FIGS. 1-5. However, as shown in the figure, sheets 606 are subjected to additional processing (e.g., see 204, 406, above) to provide holes 610 on lateral ends of each sheet. These holes (610) may be formed by drilling, cutting, punching, or any other suitable technique used to create holes in material. Such holes may be provided, for example, to accept fasteners or screws. In addition to the polymer-reinforced fibrous composite sheets 602, 606, an insert 604 may also be provided to be sandwiched between the sheets 602, 606. The insert 604 may be configured as a nonwoven fiber intermediate and/or woven fiber, used to improve and alter the mechanical properties of the overall layup. In some examples, the insert 604 may be configured as any suitable plastic or metal material for reinforcement and/or other characteristics, depending on the application. Such reinforcement may be necessary to comply with component regulations, or to tailor the mechanics of the material to a desired property. Such configurations also allow for the functionalization of the layup through adding materials with specific functions, such as electrical conductivity.

The insert 604 may also be configured with holes 612 on lateral ends, matching the hole configuration (610) of the fiber-reinforced polymer composite sheets 606. Of course, those skilled in the art will understand that the specific structure provided in this example merely shows one specific configuration, and that multitudes of other configurations are contemplated in the present disclosure.

In some examples, the metal or plastic insert (604) can be added to the layup prior to or after curing the layup (e.g., see 510, 410), to add further functionality, such as providing clipping points or screw-bolts/sleeve-nuts via the holes (610, 612). In some examples, if inserts 604 are added prior to curing, steps should be taken to ensure that the adhesion between the surface of the insert 604 and the resin system of the fiber-reinforced polymer composite sheet is adequate. This can be done through ensuring chemical compatibility (as the paper composite's resin system will function as the adhesive in this case), or providing interlocking geometrical features, in some examples. As explained above, surface layers (top, bottom) of the polymer-reinforced fibrous composite sheets (e.g., 602) may remain unaltered, while other layers (e.g., 606) affected by the insert are modified by pre-cut holes to fit the insert. Through this preparation of affected layers, the functionalized composite requires little to no postprocessing such as milling after the molding process. Furthermore, since the curing process does not require high pressures or temperatures, additively manufactured polymer composite tooling can be used. Such tools are advantageous in that they are fast and inexpensive to manufacture, allowing for a flexible and timely product upgrade, if necessary.

Materials used in the additive manufacturing of the tooling should be chosen according temperatures and pressures required by the curing process of the fiber-reinforced polymer composite material. Through these modifications, the present disclosure provides a cost- and energy-efficient material and manufacturing technology for components, such as unpainted exterior body panels, with minimized ecological footprint. Interior applications and other parts/components are also contemplated in the present disclosure.

FIG. 6B shows an illustration of an assembled fiber-reinforced polymer composite assembly 608 of FIG. 6A according to some aspects of the present disclosure. Here, a cross-sectional view ("A-A") is illustrated of assembly 608 after pressing and curing, where polymer-reinforced fibrous composite sheets 606 are configured over the insert 604, which in turn is configured over polymer-reinforced fibrous composite sheets 602. As can be seen in the figure, the holes 610, 612 in the polymer-reinforced fibrous composite sheets 606 and the insert 604 are aligned to enable the assembly to receive a screw, fastener, etc.

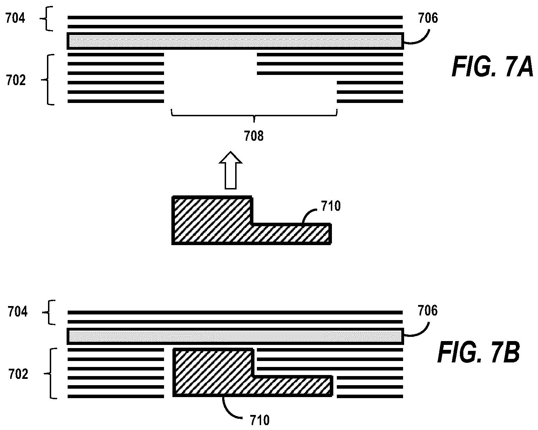

FIG. 7A shows an illustration of components of a fiber-reinforced polymer composite assembly including a cavity for housing a vehicle component according to some aspects of the present disclosure. The example of FIG. 7A is similar to that described above in FIGS. 6A-6B, in that an insert 706 is sandwiched between a first layer of fiber-reinforced polymer composite sheets 704 and a second layer of fiber-reinforced polymer composite sheets 702. As can be seen in the figure, the individual sheets may be pre-cut to different sizes, so that, after the stacking, pressing and curing, the resulting formation creates a cavity 708 that is configured to receive an external component 710. FIG. 7B shows an illustration of assembled components of the polymer-reinforced fibrous composite assembly of FIG. 7A, with the housed vehicle component 710 according to some aspects of the present disclosure. In some example, the component 710 may be any type of component configured to be inserted into the cavity 708, such as a processor-based module, a mechanical device, a decorative block, etc. As with the example of FIGS. 6A-6B, the insert 706 and the polymer-reinforced fibrous composite sheets 704 may be additionally processed with holes (not shown) to accept fasteners for securing the external component 710. In some examples, the external component 710 may be secured with adhesive.

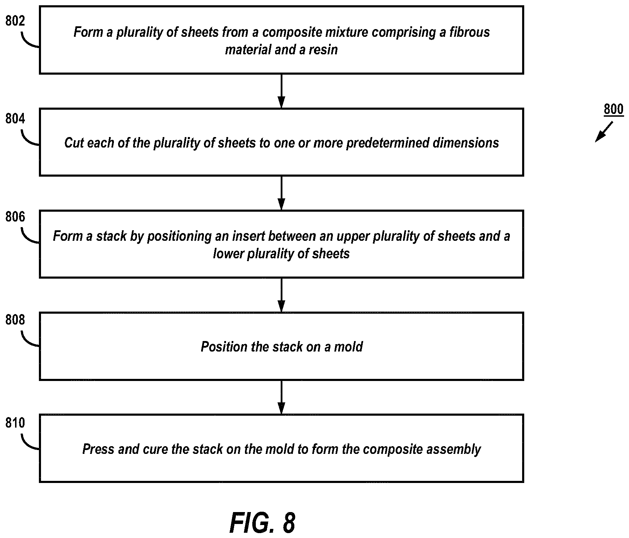

FIG. 8 shows a process 800 for constructing a polymer-reinforced fibrous composite assembly under some aspects of the present disclosure. In block 800, a plurality of sheets (e.g., 602, 608) may be formed from a composite mixture including a fibrous material and a resin, as described above. In some examples, the fibrous material may include paper, and wherein the resin may include one of a thermoset resin or a thermoplastic resin. The thermoset resin may include one of a phenolic, epoxy, unsaturated polyester, vinyl ester, polyurethane, or polyimide resin. The thermoplastic resin may include one of a polypropylene, polyethylene, polyethylene terephthalate, polycarbonate, acrylonitrile butadiene styrene, polyamides, or polystyrene resin. The resin may also be configured as a fiber resin. In some examples, the mixer/sheet formation device 104 may serve as a means for forming a composite mixture.

In block 804, each of the plurality of sheets may be cut to one or more predetermined dimensions. In some examples, cutting each of the plurality of sheets to one or more predetermined dimensions may include removing one or more portions of at least some of the plurality of sheets, and wherein the location of the one or more portions is contiguous throughout each of the at least some of the plurality of sheets. The location of the one or more portions may be configured to form at least one of a hole (e.g., 610), notch, and cavity (e.g., 708) within the at least some of the plurality of sheets when pressing and curing the stack on the mold. In some examples, a laser cutter and/or cutting machine may serve as a means for cutting.

In block 806, a stack (e.g., 608) may be formed by positioning an insert (e.g., 604, 706) between an upper plurality of sheets (e.g., 606, 704) and a lower plurality of sheets (602, 702). In block 808, the stack (e.g., 608) may be positioned on a mold, and the stack is pressed and cured on the mold to form a composite assembly. In some examples, the mold may include a doubly-curved geometric mold. The pressing and curing of the stack includes subjecting the stack to a hot press and stamping. In some examples, the press 106 may serve as a means for positioning a stack on a mold, and a means for pressing and curing to form the composite assembly.

Conventional paper composite manufacturing does not allow non-developable surfaces, and are limited to assemblies configured as substantially flat plates. Under the present disclosure, the processing of polymer-reinforced fibrous composite materials, as well as the integration of additional reinforcements in the form of inserts or other materials into paper composites, provides improved shaping of the material, while simultaneously providing additional structural integrity. By adding additional preparation of individual layers through technology such as laser cutting avoids post-processing steps such as machining and milling. Further utilizing techniques such as injection molding as described herein negates the need for coating and painting systems, which can have adverse effects on the environment.

As described above, some or all illustrated features may be omitted in a particular implementation within the scope of the present disclosure, and some illustrated features may not be required for implementation of all examples.

In the foregoing detailed description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the detailed description, with each claim standing on its own as a separate embodiment.

## Claims

1. A method for manufacturing a fiber-reinforced polymer composite assembly, comprising:

   forming a plurality of sheets from a composite mixture comprising a fibrous material and a resin;
   cutting each of the plurality of sheets to one or more predetermined dimensions;
   forming a stack by positioning an insert between an upper plurality of sheets and a lower plurality of sheets;
   positioning the stack on a mold; and
   pressing and consolidating the stack on the mold to form the composite assembly.

2. The method of claim 1, wherein positioning the stack on the mold comprises positioning the stack on a doubly-curved geometric mold.

3. The method of claim 1 or 2, wherein cutting each of the plurality of sheets to one or more predetermined dimensions further comprises removing one or more portions of at least some of the plurality of sheets, and wherein the location of the one or more portions is contiguous throughout each of the at least some of the plurality of sheets.

4. The method of claim 3, wherein the location of the one or more portions is configured to form at least one of a hole, notch and cavity within the at least some of the plurality of sheets when pressing and consolidating the stack on the mold.

5. The method of one of the preceding claims, wherein forming the fibrous material comprises forming the fibrous material using paper, and wherein the resin comprises one of a thermoset resin or a thermoplastic resin.

6. The method of one of the preceding claims, further comprising back-injection molding the composite assembly.

7. The method of one of the preceding claims, further comprising adding a supplementary fibrous material to at least one of the first composite mixture and/or second composite mixture prior to the stack being shaped, the supplementary fibrous material comprising at least some fibers that are longer than fibers in the first and second fibrous material.

8. A fiber-reinforced polymer composite assembly, comprising:

   a first plurality of sheets, each formed from a composite mixture comprising a fibrous material and a resin, wherein each of the first plurality of sheets are cut to one or more predetermined dimensions; and
   a second plurality of sheets, each formed from the composite mixture comprising the fibrous material and the resin, wherein each of the second plurality of sheets are cut to one or more predetermined dimensions;
   wherein the first plurality of sheets and the second plurality of sheets are configured to form a stack, and wherein the stack is shaped by positioning the stack on a mold and pressing and consolidating the stack to form the composite assembly.

9. The composite assembly of claim 8, further comprising an insert, positioned between the first plurality of sheets and the second plurality of sheets prior to the pressing and consolidating.

10. The composite assembly of claim 8 or 9, wherein the stack comprises a doubly-curved geometric shape.

11. The composite assembly of one of claims 8 to 10, wherein at least some the first plurality of sheets are each configured with one or more cut portions on a surface area of a sheet in a configured location, and wherein the configured location is contiguous throughout each of the at least some of the first plurality of sheets.

12. The composite assembly of claim 11, wherein the location of the one or more cut portions is configured to form at least one of a hole, notch and cavity within the at least some of the plurality of first sheets when being shaped.

13. The composite assembly of one of claims 8 to 12, wherein the fibrous material comprises paper, and wherein the resin comprises one of a thermoset resin or a thermoplastic resin.

14. The composite assembly of one of claims 8 to 13, further comprising a layer, back-injection molded to the composite assembly.

15. The composite assembly of one of claims 8 to 14, further comprising a supplementary fibrous material comprising at least some fibers that are longer than fibers in the first and second fibrous material, wherein the supplementary fibrous material is added to at least one of the first composite mixture and/or second composite mixture prior to the stack being shaped.

**FIG. 1**

**FIG. 2**

FIG. 3

404

**Resin film**

400

408

410

412

406

Cutting → **Stacking resin film and fibrous sheet** → **Pressing and curing** → **Milling Edges**

402

**Fibrous sheet**

# FIG. 4

FIG. 5

604

+

602

612

610

606

608

A    A

**FIG. 6A**

A - A

608

606

604

602

**FIG. 6B**

704 {

706

*FIG. 7A*

702 {

708

710

704 {

706

*FIG. 7B*

702 {

710

802 — Form a plurality of sheets from a composite mixture comprising a fibrous material and a resin

804 — Cut each of the plurality of sheets to one or more predetermined dimensions

806 — Form a stack by positioning an insert between an upper plurality of sheets and a lower plurality of sheets

808 — Position the stack on a mold

810 — Press and cure the stack on the mold to form the composite assembly

800

**FIG. 8**

Europäisches
Patentamt
European
Patent Office
Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 612 754 A1 (INOUE MTP KK [JP]) 10 July 2013 (2013-07-10) * abstract; figures 6,7 * * paragraph [0109] * * paragraph [0106] * * paragraph [0031] * * paragraph [0046] * * paragraph [0187] * * paragraph [0110] * * paragraph [0113] * * paragraph [0190] * * paragraph [0114] * * paragraph [0117] * * paragraph [0119] * * paragraph [0033] * ----- | 1,5-9, 13-15 | INV. B29C45/14 B29C70/08 B29C70/70 B29C70/02 B29D99/00 B29C43/20 B29C70/46 B29C70/54 B32B19/04 B32B23/00 B60R13/02 B32B9/06 B32B23/06 B32B27/10 B32B29/00 |
| X | DE 44 42 014 A1 (GREINER & SOEHNE GMBH C A) 1 June 1995 (1995-06-01) | 1-3, 7-10,12, 15 | B29C70/86 B32B38/00 |
| A | * abstract; figures 1,2,3,4,5,6,7 * * column 6, line 58 - column 7, line 6 * * column 12, line 14 - line 40 * * column 9, line 11 - line 20 * * column 13, line 43 - column 14, line 1 * * column 9, line 47 - column 10, line 3 * * column 11, line 27 - line 46 * ----- -/-- | 4-6 | TECHNICAL FIELDS SEARCHED (IPC) B29C B29D B32B B60R |

The present search report has been drawn up for all claims

| Place of search | Date of completion of the search | Examiner |
|---|---|---|
| The Hague | 17 November 2022 | Barunovic, Robert |

EPO FORM 1503 03.82 (P04C01)

page 1 of 2

Europäisches
Patentamt

European
Patent Office

Office européen
des brevets

**EUROPEAN SEARCH REPORT**

Application Number

EP 22 17 9391

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2008 030572 A1 (DRAEXLMAIER LISA GMBH [DE]) 31 December 2009 (2009-12-31) * abstract; figures 1,2 * * paragraph [0001] * * paragraph [0007] * * paragraph [0008] * * paragraph [0011] * * paragraph [0016] * * paragraph [0030] - paragraph [0031] * * paragraph [0029] * * paragraph [0034] * * paragraph [0022] * | 1,5,6,8, 11,13,14 | B29C69/00 |
| X | EP 3 398 767 A1 (TORAY INDUSTRIES [JP]) 7 November 2018 (2018-11-07) * abstract; figures 1,2,3 * * paragraph [0018] * * paragraph [0043] - paragraph [0046] * * paragraph [0048] - paragraph [0049] * * paragraph [0057] * * paragraph [0055] * * paragraph [0029] * | 1,4,12 | |
| X | GB 2 190 628 A (ENSO GUTZEIT OY) 25 November 1987 (1987-11-25) * abstract; figures 1,2 * * page 2, line 70 - line 124 * * page 1, line 104 - line 114 * * claim 2 * * claim 1 * | 1,5,8,13 | TECHNICAL FIELDS SEARCHED (IPC) |

The present search report has been drawn up for all claims

| Place of search | Date of completion of the search | Examiner |
|---|---|---|
| The Hague | 17 November 2022 | Barunovic, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 9391

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2022

| Patent document cited in search report | | Publication date | Patent family member(s) | | Publication date |
|---|---|---|---|---|---|
| EP 2612754 | A1 | 10-07-2013 | CN 103079810 A | | 01-05-2013 |
| | | | EP 2612754 A1 | | 10-07-2013 |
| | | | TW 201217171 A | | 01-05-2012 |
| | | | US 2013189509 A1 | | 25-07-2013 |
| | | | WO 2012029810 A1 | | 08-03-2012 |
| DE 4442014 | A1 | 01-06-1995 | AT 215015 T | | 15-04-2002 |
| | | | AT 401908 B | | 27-12-1996 |
| | | | CA 2136773 A1 | | 30-05-1995 |
| | | | CZ 286631 B6 | | 17-05-2000 |
| | | | DE 4442014 A1 | | 01-06-1995 |
| | | | EP 0657281 A1 | | 14-06-1995 |
| | | | JP H07232398 A | | 05-09-1995 |
| | | | KR 950013675 A | | 15-06-1995 |
| DE 102008030572 A1 | | 31-12-2009 | NONE | | |
| EP 3398767 | A1 | 07-11-2018 | CN 108290374 A | | 17-07-2018 |
| | | | EP 3398767 A1 | | 07-11-2018 |
| | | | ES 2819848 T3 | | 19-04-2021 |
| | | | JP 6863276 B2 | | 21-04-2021 |
| | | | JP WO2017115640 A1 | | 18-10-2018 |
| | | | KR 20180098226 A | | 03-09-2018 |
| | | | TW 201736098 A | | 16-10-2017 |
| | | | US 2019009497 A1 | | 10-01-2019 |
| | | | WO 2017115640 A1 | | 06-07-2017 |
| GB 2190628 | A | 25-11-1987 | DE 3716759 A1 | | 26-11-1987 |
| | | | FI 862086 A | | 20-11-1987 |
| | | | FR 2598729 A1 | | 20-11-1987 |
| | | | GB 2190628 A | | 25-11-1987 |

EPO FORM P0459

For more details about this annex : see Official Journal of the European Patent Office, No. 12/82